# EUROPÄISCHE PATENTSCHRIFT

(11) **EP 0 964 756 B1**
(45) Veröffentlichungstag und Bekanntmachung des Hinweises auf die Patenterteilung: **22.11.2000**
(21) Anmeldenummer: 97927123.6
(22) Anmeldetag: 03.06.1997
(51) Int. Cl.: B21D 1/02, B23D 63/18

(54) **VORRICHTUNG ZUM RICHTEN LANGGESTRECKTER SÄGEBLÄTTER, INSBESONDERE FÜR BANDSÄGEN**
DEVICE FOR STRAIGHTENING LONG SAW BLADES, ESPECIALLY FOR BANDSAWS
DISPOSITIF POUR REDRESSER DES LAMES DE SCIE ALLONGEES, NOTAMMENT POUR SCIES A RUBAN

(30) Priorität: 04.06.1996 DE 19622428
(43) Veröffentlichungstag der Anmeldung: 22.12.1999
(73) Patentinhaber: VOLLMER WERKE MASCHINENFABRIK GMBH, D-88400 Biberach (DE)
(72) Erfinder: BECK, Ernst, D-88437 Maselheim (DE); LENARD, Peter, D-88400 Biberach (DE)
(74) Vertreter: Goetz, Rupert, Dipl.-Ing.
(86) Internationale Anmeldenummer: EP9702882
(87) Internationale Veröffentlichungsnummer: WO9746335

(56) Entgegenhaltungen:
- WO-A-96/36453
- DE-A- 4 214 784

## Beschreibung

Die Erfindung betrifft eine Vorrichtung nach dem Oberbegriff des Anspruchs 1.

Bei einer bekannten Vorrichtung dieser Gattung (DE 42 14 784 A1) ist zwischen zwei Umlenkrollen, über die ein Sägeblatt läuft, ein Maschinentisch angeordnet, auf dem in Bewegungsrichtung des Sägeblattes hintereinander mehrere Meßstrecken angeordnet sind, nämlich eine Spannungsprofilmeßstrecke, eine Krümmungsmeßstrecke, eine Wegmeßstrecke und eine Beulen- und Dellenmeßstrecke. Auf letztere folgt eine Bearbeitungseinheit, die mehrere Walzenpaare aufweist, nämlich eines zum Planieren von Beulen, eines zum Planieren von Dellen und eines zum Korrigieren des Spannungsprofils und der Rückenkrümmung des Sägeblattes. Das letztgenannte Walzenpaar besteht aus einer oberen Walze, die am oberen Schenkel eines C-förmigen Walzengestells gelagert und mittels einer hydraulischen Kolbenzylindereinheit nach unten gegen das waagerecht zwischen den Walzen hindurchlaufende Sägeblatt drückbar ist, und einer unteren Walze, die das Sägeblatt abstützt. Die untere Walze ist in einer Verschwenkeinrichtung gelagert, die am unteren Schenkel des C-förmigen Walzengestells abgestützt und um eine senkrechte Schwenkachse schwenkbar ist. Die Schwenkachse schneidet die Drehachse der unteren Walze rechtwinklig und hat von deren Lauffläche einen erheblichen Abstand. Vor und hinter der von den drei genannten Walzenpaaren gebildeten Bearbeitungseinheit ist je ein Paar Querstabilisierungswalzen angeordnet, deren Achsen gegenüber der zur vorgesehenen Bewegungsrichtung des Sägeblattes normalen Querrichtung leicht schräggestellt sind, so daß der Rücken des Sägeblattes immer an Längsführungen anliegend gehalten wird. Der von jedem Paar Querstabilisierungswalzen ausgeübte Druck ist mittels je eines Hydraulikzylinders einstellbar. Die Längsführungen für den Blattrücken sind als Krümmungsmeßstrecke ausgebildet.

Mit Blattrücken ist hier und im folgenden bei einem einseitig verzahnten Sägeblatt dessen von der Verzahnung abgewandter Rand gemeint. Damit sollen jedoch - jedenfalls im Zusammenhang mit der vorliegenden Erfindung - beidseitig verzahnte Sägeblätter für Bandsägen oder auch für Gattersägen nicht ausgeschlossen werden; bei solchen Sägeblättern wird eine der beiden Verzahnungen anstelle eines glatten Zahnrückens abgetastet, um festzustellen, ob und wie das Sägeblatt in seiner Ebene gekrümmt ist und ob es von seiner vorgesehenen Bewegungsrichtung abweicht.

Die Gründe für die Entstehung des Spannungsprofils und die Grundsätze, nach denen es durch Walzen korrigiert wird, sind bekannt; hierzu wird neben der genannten DE 42 14 784 A1 auf die AT 342 385 B1 verwiesen.

Der Erfindung liegt die Aufgabe zugrunde, eine Vorrichtung der genannten Gattung derart weiterzubilden, daß sie auf einfachere und besonders zuverlässige Weise die genannten Zwecke erfüllt, nämlich das Walzen zum Korrigieren des Spannungsprofils und der Rückenkrümmung sowie zum Beseitigen von Verwindungen des Sägeblattes und, als Voraussetzung für die korrekte Durchführung dieser Arbeitsgänge, die Querstabilisierung des Sägeblattes.

Die Aufgabe ist erfindungsgemäß mit den Merkmalen des Anspruchs 1 gelöst.

Erfindungsgemäß werden die genannten Zwecke sämtlich von der Walzstation erfüllt, die, wie üblich, nur ein einziges Walzenpaar aufzuweisen braucht.

Vorteilhafte Weiterbildungen der Erfindung sind Gegenstand der Unteransprüche.

Ein Ausführungsbeispiel der Erfindung wird im folgenden anhand schematischer Zeichnungen mit weiteren Einzelheiten erläutert. Es zeigen:
- Fig.1: eine Schrägansicht einer erfindungsgemäßen Vorrichtung mit mehreren Stationen, darunter einer Walzstation zum Vorwärtsbewegen von Sägeblättern sowie zum Korrigieren des Spannungsprofils und der Rückenkrümmung sowie zum Beseitigen von Verwindungen der Sägeblätter,
- Fig.2: eine vergrößerte und weiter schematisierte Schrägansicht der Walzstation,
- Fig.3: die Draufsicht der Walzstation, teilweise als Schnitt III-III in Fig.4 gezeichnet,
- Fig.4: eine Seitenansicht der Walzstation, teilweise als Schnitt IV-IV in Fig.3 gezeichnet, und
- Fig.5: den Schnitt V-V in Fig.3.

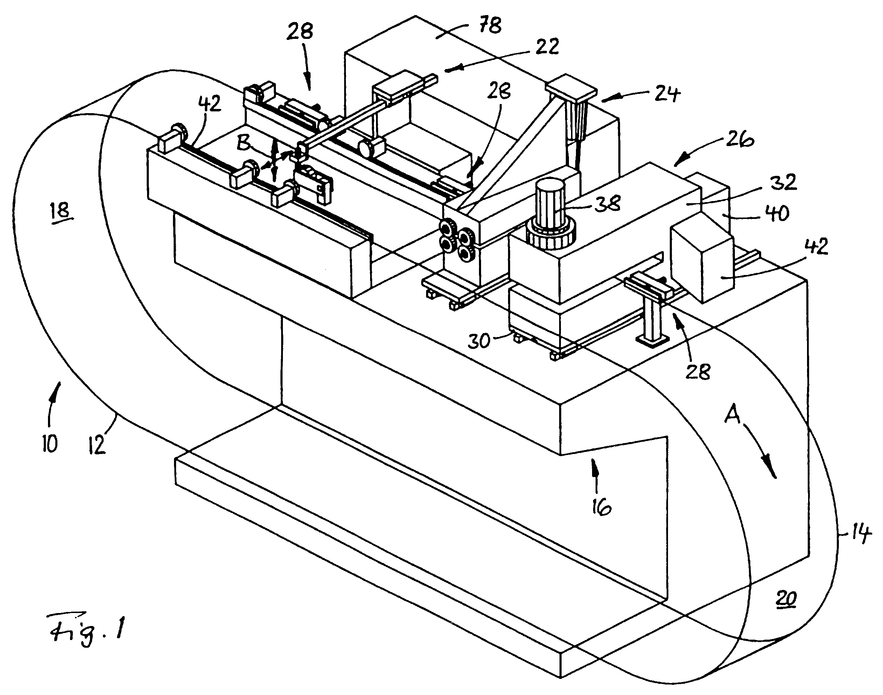

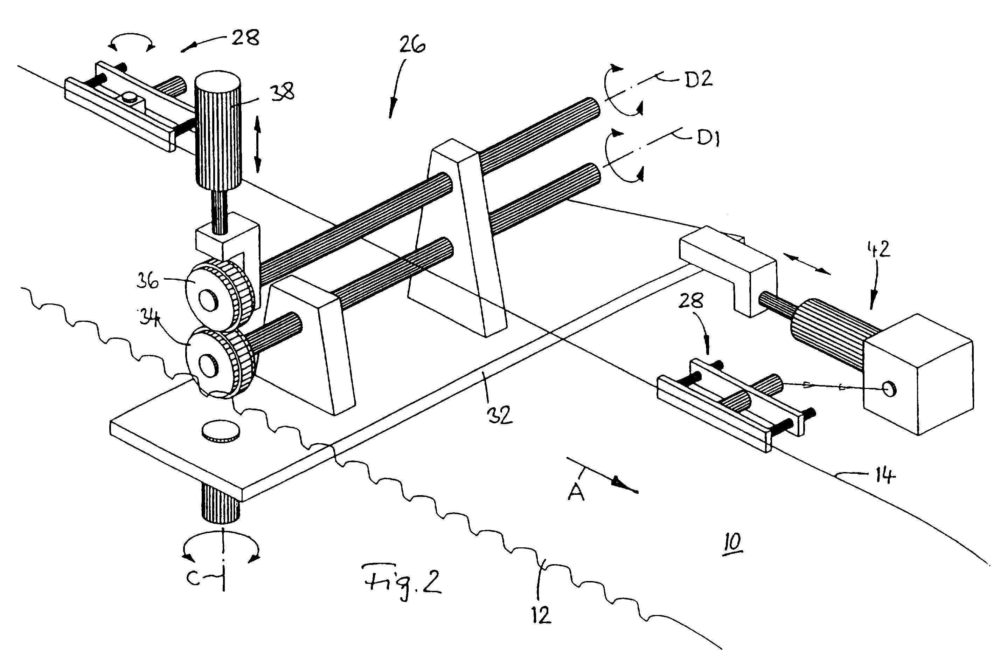

Die dargestellte Maschine ist zum automatischen Richten langgestreckter Sägeblätter 10 vorgesehen. In Fig.1 und 2 ist ein Bandsägeblatt angedeutet, das an einer Längsseite Zähne 12 und an der gegenüberliegenden Längsseite einen üblicherweise Blattrücken genannten glatten Rand 14 aufweist; es können aber auch beidseitig verzahnte Bandsägeblätter sowie Gattersägeblätter bearbeitet werden.

Die Maschine hat einen länglichen Maschinentisch 16, auf den das Sägeblatt 10 derart aufgelegt wird, daß es dahinter und davor je einen ungefähr halbkreisförmigen Bogen 18 bzw. 20 bildet. Das Sägeblatt 10 läuft in Richtung des Pfeils A in Fig.1 und 2 durch mehrere auf dem Maschinentisch 16 angeordnete Stationen, nämlich eine erste Meßstation 22, die in einer senkrechten Meßebene B die Oberfläche des Sägeblattes 10 in senkrechter Richtung abtastet, eine Planierstation 24 zum Einebnen von Beulen und Dellen im Sägeblatt 10, eine Walzstation 26, mit der sich das Sägeblatt 10 antreiben und mit einem gewünschten Spannungsprofil sowie einer gewünschten Rückenkrümmung versehen läßt, und mindestens eine zweite Meßstation 28, die den Blattrücken 14 in waagerechter Richtung, quer zur Bewegungsrichtung A, abtastet. Im dargestellten Beispiel sind drei zweiten Meßstationen 28 zum Abtasten des Blattrückens 14 über die gesamte Länge des Maschinentisches 16 verteilt angeordnet. Die erste Meßstation 22, die Planierstation 24 sowie die zweiten Meßstationen 28 können von bekannter Bauart sein und werden deshalb nicht näher beschrieben. Das Sägeblatt 10 kann auch in Gegenrichtung des Pfeils A bewegt werden.

Zur Walzstation 26 gehört ein Unterbau 30, der auf dem Maschinentisch 16 waagerecht, quer zur Bewegungsrichtung A, verstellbar geführt ist. Auf dem Unterbau 30 ist ein in Seitenansicht C-förmiges Walzengestell 32 um eine senkrechte Schwenkachse C schwenkbar gelagert. Im Walzengestell 32 sind eine erste, untere Walze 34 und eine zweite, obere Walze 36 um zueinander annähernd parallele, annähernd waagerechte Drehachsen D1 und D2 drehbar gelagert. Die zweite Walze 36 ist mittels einer Anpreßvorrichtung 38, beispielsweise einer hydraulischen Kolbenzylindereinheit, gegen das auf der esten Walze 34 abgestützte Sägeblatt 10 drückbar. Die Schwenkachse C schneidet beide Drehachsen D1 und D2 unter annähernd rechten Winkeln und erstreckt sich durch die Stellen, an denen die Walzen 34 und 36 das Sägeblatt 10 berühren. Mit anderen Worten liegt je ein Durchmesser der beiden Walzen 34 und 36 auf der Schwenkachse C. Zum Antrei ben der Walzen 34 und 36 weist die Walzstation 26 einen Motor 40 auf.

Zur Walzstation 26 gehört ferner ein Stelltrieb 42, beispielsweise ein Servomotor, mit dem sich das Walzengestell 32 um die Schwenkachse C schwenken und dadurch aus einer Mittellage derart geregelt schrägstellen läßt, daß der Blattrücken oder Rand 14 des Sägeblattes 10 innerhalb eines vorgegebenen Toleranzbereichs an der dritten der drei ihm zugeordneten zweiten Meßstationen 28 entlangläuft. Als Mittellage ist diejenige Lage des Walzengestells 32 zu verstehen, in der die erste Walze 34 und zumindest annähernd auch die zweite Walze 36 in Längsrichtung des Maschinentisches 16 laufen. Um zu gewährleisten, daß der Blattrücken 14 an der dritten der zweiten Meßstationen 28 entlangläuft, genügt es im allgemeinen, das Walzengestell um weniger als 1° nach der einen oder anderen Seite aus seiner Mittellage herauszuschwenken. Vorsorglich beträgt der maximale Schwenkbereich des Walzengestells 32 jedoch etwa 3° nach jeder Seite, also insgesamt etwa 6°.

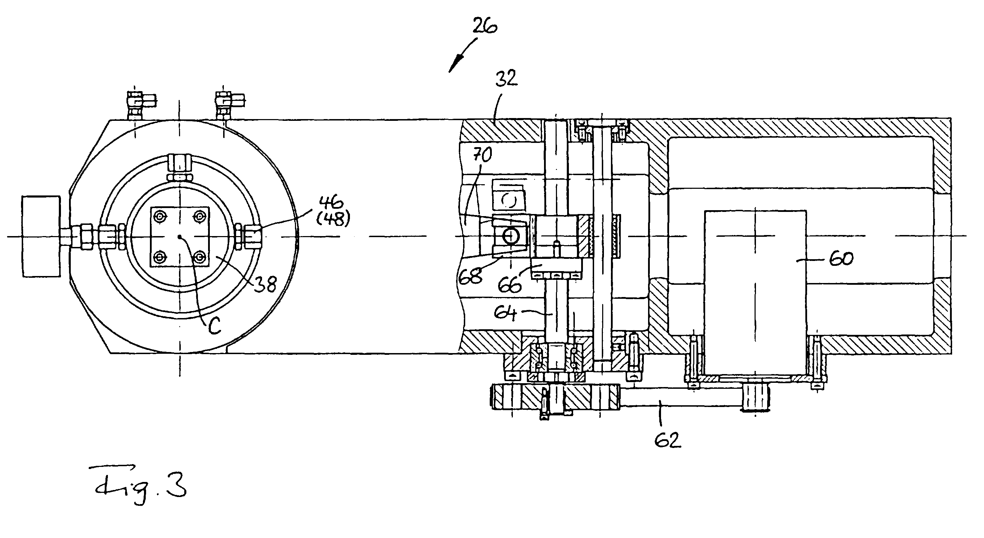

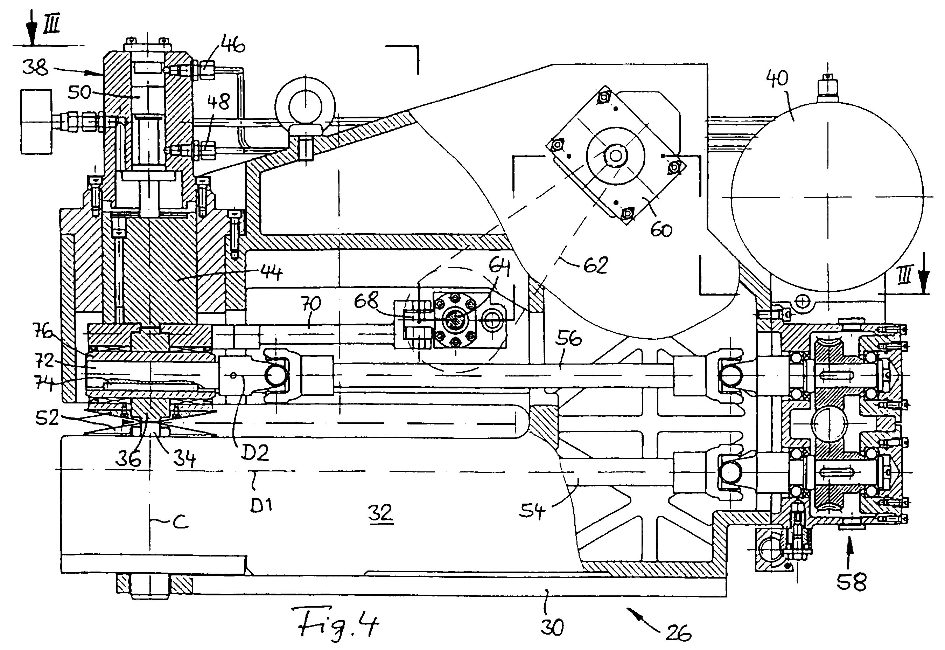

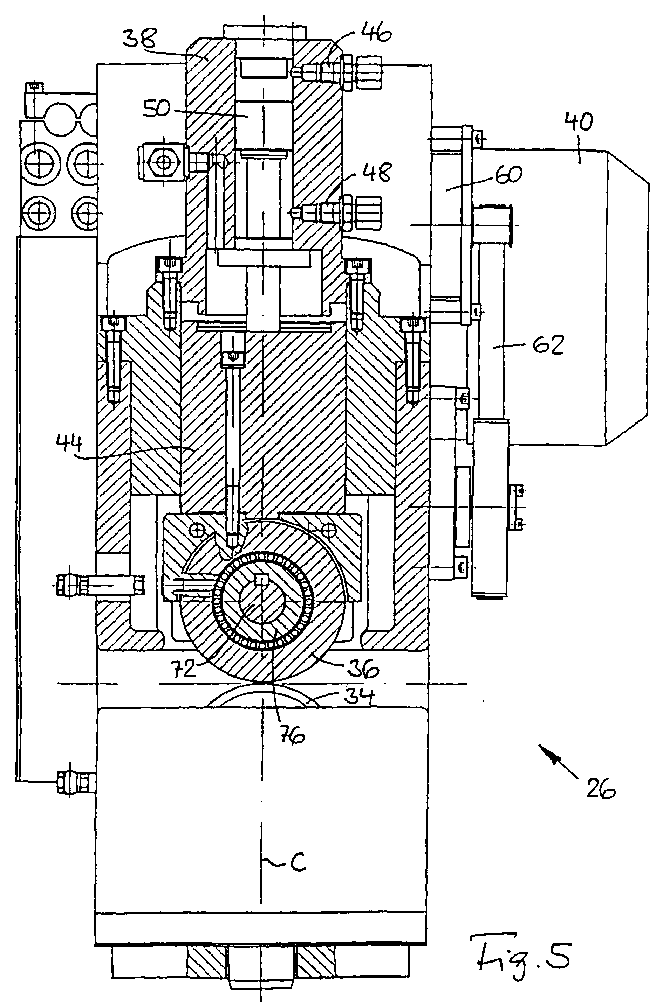

Die bisher beschriebenen Einzelheiten der Walzstation 26 sind aus Fig.1 und 2 ersichtlich. Weitere Einzelheiten, die in Fig.3 bis 5 dargestellt sind, werden im folgenden beschrieben:

Die erste Walze 34 ist mittels üblicher Gleit- oder Wälzlager in einer bezüglich des Walzengestells 32 unveränderlichen Stellung gelagert. Die zweite Walze 36 ist hingegen an einem Lagerkörper 44 gelagert, der um die Schwenkachse C schwenkeinstellbar und mittels der Anpreßvorrichtung 38 längs der Schwenkachse C zustellbar im Walzengestell 32 geführt ist. Die als Anpreßvorrichtung 38 vorgesehene Kolbenzylindereinheit ist im dargestellten Beispiel doppeltwirkend; sie hat einen oberen Einlaß 46 und einen unteren Einlaß 48 für Druckfluid, das auf einen Kolben 50 einwirkt, mit dem der Lagerkörper 44 fest verbunden ist. Die zweite Walze 36 kann somit zum Walzen mit einem Druck, der regelbar ist, abwärts gedrückt und zum Einschieben sowie zum Herausziehen eines Sägeblattes 10 in die bzw. aus der Walzstation 26 angehoben werden. Damit das Sägeblatt 10 beim Einschieben nicht an einer der Walzen 34 oder 36 hängenbleibt, sind diese von je einer kegelförmigen Ringscheibe 52 umschlossen, die am Walzengestell 32 bzw. am Lagerkörper 44 befestigt ist.

Die beiden Walzen 34 und 36 sind über je eine Gelenkwelle 54 bzw. 56 antreibbar, die über ein gemeinsames Schneckengetriebe 58 vom Motor 40 antreibbar sind. Zum Schwenken der zweiten Walze 36 gegenüber der ersten Walze 34 ist ein Motor 60, beispielsweise Servomotor, vorgesehen, der in das Walzengestell 32 eingebaut und über einen Riementrieb 62 mit einer im Walzengestell gelagerten Gewindespindel 64 verbunden ist. Die Gewindespindel 64 ist waagerecht in einem Abstand von der Schwenkachse C, rechtwinklig zu dieser sowie zur Drehachse D1, angeordnet und trägt eine Gewindemutter 66, die über eine Kulissenführung 68 mit einem Hebel 70 verbunden ist. Dieser erstreckt sich rechtwinklig zur Schwenkachse C und ist am Lagerkörper 44 befestigt. Damit die Schwenkeinstellbarkeit des Lagerkörpers 44, und somit der Walze 36, gegenüber dem Walzengestell 32 durch die zugehörige Gelenkwelle 56 nicht behindert wird, weist diese einen Wellenstummel 72 auf, der durch eine Paßfeder 74 oder dgl. drehmomentübertragend, jedoch axial verschiebbar mit einer zur zweiten Walze 36 gehörenden Hülse 76 verbunden ist.

Die Anpreßvorrichtung 38 und die beiden Motoren 40 und 60 werden von einer Rechen- und Steuereinheit 78 gesteuert, an die sämtliche Meßstationen 22 und 28 angeschlossen sind.

## Patentansprüche

1. Vorrichtung zum Richten eines langgestreckten Sägeblattes, insbes. für Bandsägen, mit
- einem Maschinentisch (16), auf dem das Sägeblatt (10) in einer mit seiner Längsrichtung im wesentlichen übereinstimmenden Bewegungsrichtung (A) bewegbar ist,
- einer am Maschinentisch (16) angeordneten ersten Meßstation (22) zum Vermessen des Sägeblattes (10) in einer zu dessen Bewegungsrichtung (A) normalen Meßebene (B),
- mindestens einer am Maschinentisch (16) angeordneten zweiten Meßstation (28) zum Abtasten eines Randes (14) des Sägeblattes (10) in dessen Ebene quer zur Bewegungsrichtung (A) und
- einer am Maschinentisch (16) angeordneten Walzstation (26) mit einer ersten und einer zweiten Walze (34,36) zum Verändern des Spannungsprofils des Sägeblattes (10) und der Krümmung von dessen Rand (14), wobei
- die zweite Walze (36) gegenüber der ersten Walze (34) um eine die Drehachsen (D1,D2) beider Walzen (34,36) annähernd rechtwinklig schneidende Schwenkachse (C) schwenkeinstellbar und dadurch schrägstellbar ist, um Verwindungen des Sägeblattes (10) zu korrigieren,
dadurch gekennzeichnet, daß beide Walzen (34,36) gemeinsam um die genannte Schwenkachse (C) schwenkeinstellbar und dadurch entsprechend den Meßdaten der zweiten Meßstation (28) schrägstellbar sind, um Abweichungen des Sägeblattes (10) von der vorgesehenen Bewegungsrichtung (A) zu korrigieren.

2. Vorrichtung nach Anspruch 1,
dadurch gekennzeichnet, daß
- die beiden Walzen (34,36) an einem um die Schwenkachse (C) schwenkeinstellbaren Walzengestell (32) gelagert sind und
- die zweite Walze (36) am Walzengestell (32) mittels eines Lagerkörpers (44) gelagert ist, der in bezug auf das Walzengestell um die Schwenkachse (C) schwenkeinstellbar und zum Anpressen dieser Walze an das Sägeblatt (10) längs der Schwenkachse zustellbar ist.

3. Vorrichtung nach Anspruch 1 oder 2,
dadurch gekennzeichnet, daß die Schwenkachse (C) sich annähernd längs je eines Durchmessers der beiden Walzen (34,36) erstreckt.

## Claims

1. An apparatus for straightening an elongate saw blade, especially for endless saws, comprising
- a machine table (16) on which the saw blade (10) is movable in a direction of movement (A) which essentially conforms to its longitudinal extension
- a first measuring station (22) disposed at the machine table (16) to measure the saw blade (10) in a measuring plane (B) perpendicular to the direction of movement (A) thereof,
- at least one second measuring station (28) disposed at the machine table (16) to scan an edge (14) of the saw blade (10) in the plane thereof transversely of the direction of movement (A), and
- a rolling station (26) disposed at the machine table (16) and comprising first and second rollers (34, 36) for changing the tension profile of the saw blade (10) and the curvature of the edge (14) thereof,
- the second roller (36) being pivotably adjustable with respect to the first roller (34) about a pivot axis (C) which intersects the axes of rotation (D1, D2) of the two rollers (34, 36) approximately at right angles and thereby adapted to be positioned obliquely for correcting distortions of the saw blade (10),
**characterized** in that both rollers (34, 36) are pivotably adjustable in common about the pivot axis (C) and thus adapted to be positioned obliquely in accordance with the measuring data supplied by the second measuring station (28) in order to correct deviations of the saw blade (10) from the envisaged direction of movement (A).

2. The apparatus as claimed in claim 1, characterized in that
- the two rollers (34, 36) are supported in a roller stand (32) which is pivotably adjustable about the pivot axis (C), and
- the second roller (36) is supported in the roller stand (32) by a bearing body (44) which is pivotably adjustable about the pivot axis (C) with respect to the roller stand and adapted to be advanced along the pivot axis to press the second roller against the saw blade (10).

3. The apparatus as claimed in claim 1 or 2, characterized in that the pivot axis (C) extends substantially along a diameter each of the two rollers (34, 36).

## Revendications

1. Dispositif pour le dressage d'une lame de scie allongée, en particulier pour des scies à ruban, comprenant :
- un tablier de machine (16) sur lequel la lame de scie (10) est mobile dans une direction de déplacement (A) qui coïncide sensiblement avec sa direction longitudinale,
- une première station de mesure (22) agencée sur le tablier de machine (16) pour mesurer la lame de scie (10) dans un plan de mesure (B) perpendiculaire à sa direction de déplacement (A),
- au moins une deuxième station de mesure (23), agencée sur le tablier de machine (16) pour palper une bordure (14) de la lame de scie (10) dans son plan, perpendiculairement à la direction de déplacement (A), et
- une station de laminage (26), agencée au niveau du tablier de machine (16), comprenant un premier et un deuxième cylindre (34, 36) pour modifier le profil de contrainte de la lame de scie (10) et la courbure de sa bordure (14), et dans lequel
le deuxième cylindre (36) est susceptible d'être ajusté par rapport au premier cylindre (34) par basculement autour d'un axe de basculement qui recoupe approximativement à angle droit les axes de rotation (D1, D2) des deux cylindres (34, 36), et grâce à cela susceptible d'être disposé en oblique, afin de corriger des voilages de la lame de scie (10),
caractérisé en ce que les deux cylindres (34, 36) peuvent être conjointement ajustés par basculement autour dudit axe de basculement (C), et grâce à cela d'être disposés en oblique selon les données de mesure de la deuxième station de mesure (28), afin de corriger des écarts la lame de scie (10) depuis la direction de déplacement prévue (A).

2. Dispositif selon la revendication 1,
caractérisé en ce que
- les deux cylindres (34, 36) sont montés sur un châssis (32) ajustable par basculement autour de l'axe de basculement (C), et
- le deuxième cylindre (36) est monté sur le châssis (32) au moyen d'un corps de montage (44), lequel est susceptible d'être ajusté par rapport au châssis par basculement autour de l'axe de basculement (C), et susceptible d'être approché le long de l'axe de basculement afin de presser ce cylindre contre la lame de scie (10).

3. Dispositif selon l'une ou l'autre des revendications 1 et 2,
caractérisé en ce que l'axe de basculement (C) s'étend approximativement le long d'un diamètre respectif des deux cylindres (34, 36).
